# EUROPEAN PATENT APPLICATION

(11) **EP 1 887 492 A1**
(43) Date of publication of application: **13.02.2008**
(21) Application number: 07015798.7
(22) Date of filing: 10.08.2007
(51) Int. Cl.: G06K 9/20

(54) **Symmetric filter patterns for enhanced performance of single and concurrent driver assistance applications**

(30) Priority: 10.08.2006 US 836670 P
(71) Applicant: MobilEye Technologies, Ltd., 1034 Nicosia (CY)
(72) Inventor: Stein, Gideon, Jerusalem 96263 (IL); Hadassi, Ofer, Modiin 71741 (IL)
(74) Representative: Arth, Hans-Lothar

(57) **Abstract**

A system mounted on a vehicle for performing vehicle control applications and driver warning applications, the system including a camera configured to acquire a plurality of images of the environment in front of the camera. The camera includes a filter wherein the filter is installed at the focal plane of the camera and wherein designated portions of the filter transmit selective light wavelength. The preferred filter has a checkerboard pattern. The system further including an image processor capable of analyzing in real time a plurality of respective image sequences acquired from at least one of the portions of the filter and is capable of detecting yellow lane markings on a concrete road surface.

## Description

### CROSS REFERENCE TO RELATED APPLICATIONS

This application claims the benefit under 35 USC 119(e) from US provisional application 60/836,670 filed Aug 10th, 2006, the disclosure of which is included herein by reference.

### FIELD OF THE INVENTION

The present invention relates to driving assistant systems (DAS) in vehicles such as vehicle lane departure warning (LDW) systems and automatic headlight control (AHC) systems, and more specifically to the combination of multiple DAS systems being run in parallel including a camera with a filter with symmetric patterns, such as a checkerboard filter.

### BACKGROUND OF THE INVENTION AND PRIOR ART

As cameras become smaller and technology becomes more advanced, more processing can be done to assist a driver of a vehicle. There are various driving assistant systems (DAS) which are known in the industry including, lane departure warning (LDW), to notify a driver when a lane divider is accidentally crossed; lane change assist (LCA) to monitor vehicles on the side of the vehicle and notify the driver when the path is clear to change lanes; Forward collision warning (FCW), to indicate when a pending rear end collision might occur; and automatic headlight control (AHC), to lower the drivers high beams when an oncoming vehicle is detected. A DAS can be either a passive system, informing the driver about a detected item or event of interest, or an active system, whereas the system intervenes in the driving, for example activating the brakes. The terms "DAS system", DAS application" and "control system" are used herein interchangeably.

Some of the DAS applications maybe run in daytime or nighttime mode (LDW), whereas other applications are limited for nighttime applications (AHC). The camera requires different settings for daylight then it does for nightlight operation. Changing the camera settings between applications is not efficient - and both applications would suffer lose of imaging frames. To install multiple cameras in a vehicle is a costly and weighty solution.

Therefore there is a need to be able to simultaneously run multiple driving assistant systems which require different camera settings.

The system of the present invention performs in parallel a number of DAS applications. The system detects and classifies objects in real time, e.g. vehicles, pedestrians, oncoming vehicle headlights, leading vehicle taillights and streetlights, in a series of images obtained from a camera mounted on a vehicle. The images are used in parallel by a number of DAS applications including lane departure detection, forward collision control and headlight control systems. The classification of objects is preferably used by more than one of the vehicle DAS applications. In a headlight control system, the classification of objects is used to provide a signal for switching the headlights between high beams and low beams.

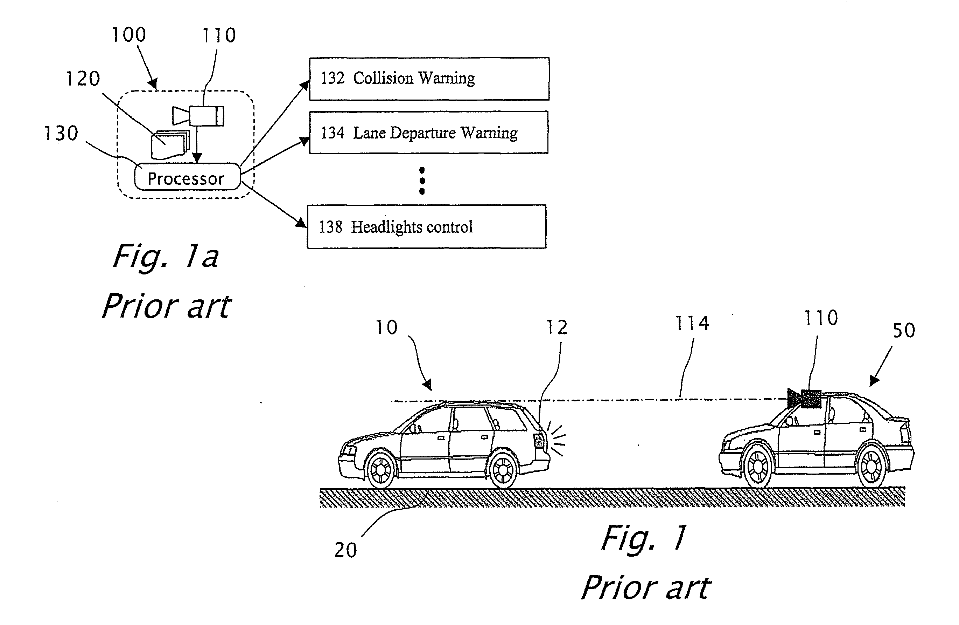

Reference is now made to Figures 1 and 1a (prior art) which illustrate a vehicle control system 100 including a camera or image sensor 110 mounted in a vehicle 50 imaging a field of view in the forward direction, having an optical axis 114. Image sensor 110 typically delivers images in real time and the images are captured in a time series of image frames 120. An image processor 130 is used to process image frames 120 to perform a number of prior art vehicle DAS applications. Vehicle 50 is, for example, following a lead vehicle 10.

The terms "object" and "obstacle" are used herein interchangeably.

The terms "camera" and "image sensor" are used herein interchangeably.

Exemplary prior art vehicle control sub-systems are:
Block 132 - a collision warning sub-system. A Collision Warning system is disclosed in US Patent 7,1 13,867 given to Stein, and included herein by reference for all purposes as if entirely set forth herein. Time to collision is determined based on information from multiple images 120 captured in real time using camera 110 mounted inside vehicle 50.
Block 134 - a lane departure warning (LDW) sub-system. Camera based LDW systems perform tasks including detecting the road and lanes structure, as well as the lanes vanishing point. Such a system is described in US patent No. 7,1 51,996 ('996) given to Stein et al, the disclosure of which is incorporated herein by reference for all purposes as if entirely set forth herein. If a moving vehicle has inadvertently moved out of its lane of travel based on image information from images 120 from forward looking camera 110, then system 100 signals the driver accordingly. Road geometry and triangulation computation of the road structure are described in patent '996. The use of road geometry works well for some applications, such as forward collision warning (FCW) systems based on scale change computations, and other applications such as headway monitoring, adaptive cruise control (ACC) which require knowing the actual distance to the vehicle ahead, and lane change assist (LCA), where a camera is attached to or integrated into the side mirror, facing backwards.
Block 138 - an automatic vehicle headlight control sub-system. Automatic vehicle headlight control for automatically controlling the status of the vehicle's headlights. Automatic vehicle headlight control increases the safety as well as reduces the hazard caused by the occasional failure of the driver to deactivate the high beams which distract the other driver. US application 11/689,523 ('523) filed on May 22^{nd} 2007, the disclosure of which is incorporated herein by reference for all purposes as if entirely set forth herein, describes a system and methods for detecting on coming vehicles, preceding vehicles and street lights, and providing a signal to the headlight control unit of the car to switch from high beams to low beams or vise versa. Application '523 includes using a red/clear checkerboard filter yielding a red image stream and a clear image stream for detecting the taillights and headlights of other vehicles.

Vehicle control systems, such as disclosed in US application '523 which rely on changing exposure parameters (i.e., aperture, exposure, magnification, etc) of camera 110 in order to get optimal results for one application, e.g. detecting oncoming vehicles headlights, have a difficult time maintaining other control systems which rely on the same camera 110, e.g. lane departure warning, forward collision warning, etc. As a result of changing exposure parameters half or more of the (possibly critical) frames may not be available for the other control systems. This greatly affects performance of the other control systems.

It is advantageous to be able to use the same image sensor that is used for other applications such as LDW, FCW and headway monitoring. Bundling up multiple applications into the same hardware reduces cost but more importantly the space the hardware occupies is reduced. Since at least the camera unit of the systems is typically mounted on the windshield near the rear-view mirror, the camera unit must be small so as not to block the driver's view of the road.

The lane detection algorithm (LDA), which is the core of the LDW system, can be performed on grayscale images in most cases. Black and white (B&W) cameras have the advantage of being more sensitive than color cameras and thus work better on unlit roads on dark nights. But B&W cameras also suffer from some deficiencies, including:
1. The brightness of a lane marking in the image is sometimes the same as the brightness of the road surface even though the hue (or color) is different. As a result the lane marking is very clear to the driver but invisible in the camera image. For example, yellow markings on a concrete road often appear in a B&W image with the same intensity, thus the lane marking is not distinguishable in the image and thus, cannot be distinguished from the road surface.
2. In order for the camera to perform well on unlit roads on dark nights, but on bright sunny days, the images acquired are often saturated and the camera must be set with a very low exposure (typically 25-100µSec, at pixel readout rate of 25MHz). A camera "quantization problem" is aroused by the fact that an exposure time can be set only by "chunks" defined by an image line length (in pixels) and the time required to acquire a single pixel. This quantization makes it difficult to control the set an optimal exposure: if an image line is read in 25µSec, image lines are read in 25µSec chunks. Thus, 25µSec might be too short but 50µSec might be too long, but cannot specify a 37µSec exposure time, for example, which is not a multiple of a chunk of 25µSec. In some cases even an exposure of 25µSec in duration is too long and the intensity image of the road surface becomes saturated.

A color camera can be used to detect the color of various patches of the road and thus determine the lane markings in the color image. However conversion of the image to color space, and the handling the color image, requires significantly more memory and computation power which are always at a premium in embedded applications.

It would also be possible to solve the problem of detecting yellow lines on concrete by adding a colored filter in front of the camera. For example, a yellow filter will cut out the blue light reflected off the road surface and thus darken the road surface relative to the yellow lane marks. But adding a colored filter in front of the camera reduces the brightness of the image (by about 30%), which might enhance the problem of the camera performance on unlit roads on dark nights. A red filter could also be used with similar deficiencies.

Thus there is a need for and it would be advantageous to have a system performing multiple DAS applications such as LDW, Forward Collision Warning (FCW), headway monitoring and vehicle headlights control, using the same B&W camera and capable of detecting yellow lanes on a concrete road and resolve saturation in images on bright days.

The red/clear filter and the combination of obtained respective red image stream and the clear image stream can be used as input to two completely different DAS applications at the same time. Using the two image streams of the red/clear filter, multiple applications may be run on a color camera or a black and white camera.

### SUMMARY OF THE INVENTION

The term "respective images" is used herein to refer to two or more images acquired concurrently by a camera. In a camera using a filter installed at a focal plane of the camera, for example a checkerboard filter, the dark squares of the checkerboard preferentially transmit a pre selected color light, such as red light, and the other squares are, for example, comparatively clear and transmit white light. One image is formed from the colored/red light transmitted by the dark squares of the checkerboard and a respective image is formed concurrently from the white light transmitted by the light/white squares of the checkerboard filter. The term "colored/red image portion" is used herein to refer to images obtained from the portion of the single image transmitted by the clear portion of a filter. The term "clear image portion" is used herein to refer to images obtained from the portion of the single image transmitted by the colored/red portion of a filter.

The term "symmetric images" is used herein to refer to two or more respective images having the generally same number of pixels (typically, ± one pixel) arranged in generally the same number of columns and rows and having substantially the same pixel size (typically, ± one column/row).

The term "primary image" is used herein to refer to images obtained from the filter which is selected to perform the vehicle control and/or driver warning applications.

The term "secondary image" is used herein to refer to images obtained from filters which are not currently selected to perform the vehicle control and/or driver warning applications and serve to support the respective symmetric primary image.

It is the intention of the present invention to provide a system and method of use, the system mounted on a vehicle for performing vehicle control applications and driver warning applications including a camera typically mounted inside the vehicle, the camera configured to acquire a plurality of images of the environment in front of the camera, the camera further includes a filter wherein the filter is installed at the focal plane of the camera and wherein designated portions of the filter transmit selective light wavelength. The system further including an image processor capable of analyzing in real time a plurality of respective image sequences acquired from at least one of the portions of the filter.

Preferably, the filter has a checkerboard pattern having two colors, thereby two images are acquired - one from each light color transmitted by each of the color squares of the checkerboard filter. Two respective images, acquired from each portion of the filter are substantially symmetric images, having substantially the same resolution and being distributed substantially symmetrically over the plane of the filter. The two colors of the checkerboard filter are preferably red and clear, whereas the red portion transmits red light and the clear portion transmits substantially all wave length of light (white light).

It should be noted that the average intensity of a red image is lower by 35-50% of the average intensity a respective clear image, and thereby if a pixel in said clear image is saturated, the corresponding pixel in the respective red image is not saturated. Hence, in the day time with very bright days, red images are used as the primary images to prevent the saturation of images as typically occur in clear images.

In embodiments of the present invention, the filter is a "stripe" filter wherein the colors of the stripes alternate cyclically. The structure of the filter is not limited to a checkerboard pattern or stripe pattern, and other shapes or geometric lattices may be similarly be used.

In methods of using the system of the present invention, automatically select which stream of color (red/clear) images is used, depending on existing environment conditions such as day/night.

In embodiments of the present invention the system uses both respective symmetrical images acquired from each of the portions of the filter, to detect objects in said images and an object is detected in both images or in the primary image only, the primary image stream is used by the system to further process the detected object.

In embodiments of the present invention the system uses both respective symmetrical images acquired from each of the portions of the filter, to detect objects in said images and an object is detected in secondary images only, the secondary image stream is used by the system to further process the detected object. The detected object can be a yellow lane marked on a concrete road surface.

In embodiments of the present invention the system uses concurrently performs two DAS different applications. For example: during night operation, the clear image stream is used as the primary image stream for an LDA application and the red image stream is used as the primary image stream an AHC application.

### BRIEF DESCRIPTION OF THE DRAWINGS

The present invention will become fully understood from the detailed description given herein below and the accompanying drawings, which are given by way of illustration and example only and thus not limitative of the present invention, and wherein:
FIG. 1 is a prior art drawing of a conventional vehicle with a mounted camera for vehicle control systems;
FIG. 1a is a drawing illustrating multiple prior art vehicle control outputs using a single hardware camera and hardware;
FIG. 2 is a drawing according to an embodiment of the present invention of a vehicle control system using the same camera and hardware as in Figure 1 a;
FIG 2a is a drawing of a red/clear filter used in accordance with an embodiment of the present invention;
FIG. 3 illustrates another filter, in accordance with embodiments of the present invention;
FIG. 4 illustrates yet another filter, in accordance with embodiments of the present invention;
FIG. 5 is a drawing according to an embodiment of the present invention of a vehicle control and/or warning system using the same camera and hardware as in Figure 1a; and
FIG. 6 illustrates a monitor output of a lane departure warning system and a vehicle headlight control system, according to embodiments of the present invention.

### DESCRIPTION OF THE PREFERRED EMBODIMENTS

The present invention is an improved system mounted on a vehicle for performing LDW and AHC applications and possibly for performing other vehicle control and driver warning applications. The system includes a camera mounted inside the cabin and configured to acquire images of the road in front of the camera. In a dark environment, upon detecting a leading vehicle or oncoming vehicles the system switches the headlights to low beam, otherwise the system switches the headlights to high beam. The camera of the present invention includes a filter preferably with a checkerboard pattern, the checkerboard pattern being a red and clear filter combination. The checkerboard filter yields a pair of symmetric respective images: a clear image and a red image, whereas both images have substantially identical resolutions. The system of the present invention can use either the clear image or the red image as the primary image, to perform the warning and control applications, whereas the other image is used to enhance the system performance capabilities.

Before explaining embodiments of the invention in detail, it is to be understood that the invention is not limited in its application to the details of construction and the arrangement of the components set forth in the host description or illustrated in the drawings.

Unless otherwise defined, all technical and scientific terms used herein have the same meaning as commonly understood by one of ordinary skill in the art of the invention belongs. The methods and examples provided herein are illustrative only and not intended to be limiting.

In an embodiment of the present invention there is provided an image sensor with a filter, which is placed in a focal plane of the camera or in contact with the light sensitive surface. The filter includes at least two groups of elements, each group of element allowing transmission of at least partially different frequencies, arranged, for example, in a checkerboard pattern.

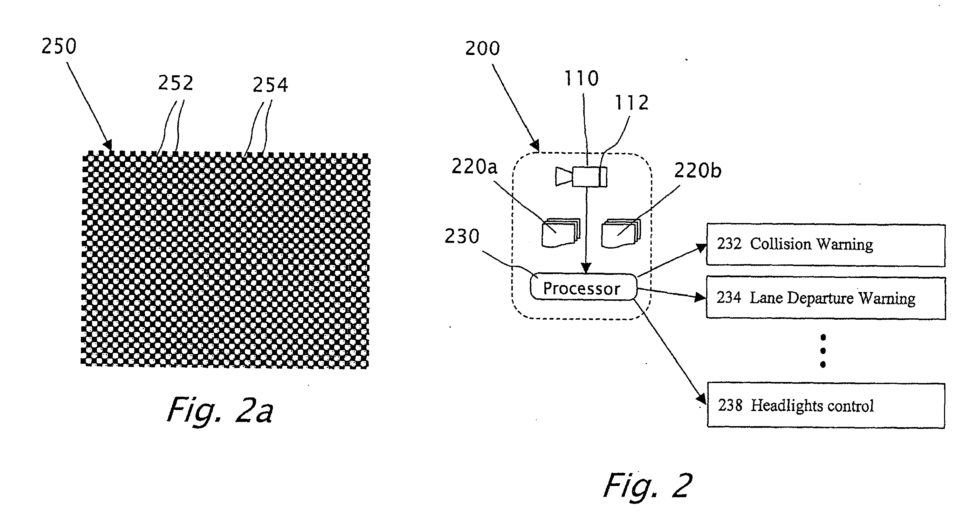

Referring now to the drawings, Figure 2 schematically illustrates a system 200 according to embodiments of the present invention. Image frames 120 are captured from image sensor or camera 110. Methods according to different embodiments of the present invention analyze using an image processor 230 in real time one or more of shape, position and motion of spots of measurable brightness in image frames 220. In US application '523, a red/clear filter such as "checkerboard" filter is used to distinguish between red and white lights and for classifying the lights.

Reference is also made to Figure 2a which illustrates a checkerboard filter 250, in accordance with embodiments of the present invention. In a camera 110, using a checkerboard filter 250, one stream of images 220a is formed from the light transmitted by dark squares 254 of the checkerboard which preferentially transmit red light and the other squares 252 are comparatively clear and transmit white light to form a second stream of respective images 220b. The symmetry in resolution of the checkerboard pattern of checkerboard filter 250 makes images 220a acquired from the colored portion of checkerboard filter 250 and respective images 220b acquired from the clear portion of checkerboard filter 250 generally symmetric images, enabling a smooth switching of images acquired from one portion of checkerboard filter 250 to images acquired from another portion of checkerboard filter 250.

Red/cfear filter 250 is installed at a focal plane 112 of image sensor 110 so that an imaged spot from an object, e.g. portions of a road surface, obstacles, headlights of an oncoming vehicle, streetlights, taillights of a leading vehicle, falls on multiple pixels both with and without red filtering of red/clear filter 250. The imaged spot is correlated with the [spatial transmittance] profile, e.g. checkerboard of red/clear filter 250. In day time, a spot, such as an image of a yellow lane marking on a cement road surface 20, will have a high correlation with the checkerboard red pixels profile and a comparatively poor correlation with the checkerboard clear pixels profile of filter 250. Thus, in daytime, the correlation with the red filter profile is preferably used to detect yellow lane marking on a cement road surface 20.

It should be noted that the red/clear filter is given here by way of example only and other colored filters combination can be used adaptive to the detecting application. In certain scenes the image acquired from one color element is used as the primary image and in other scenes the image acquired from another color element is used as the primary image.

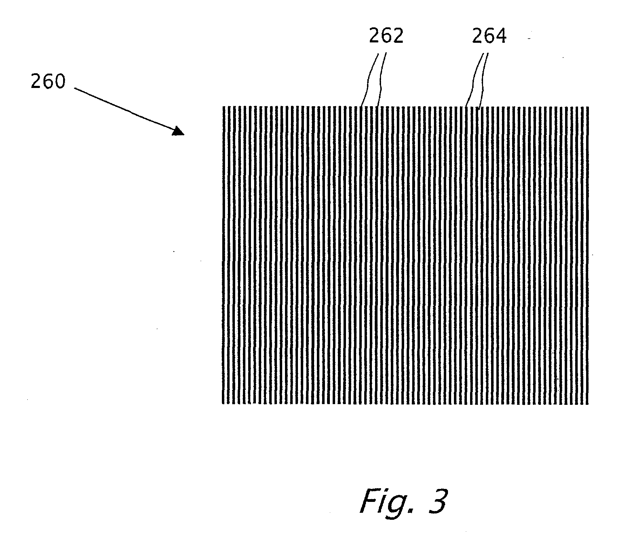

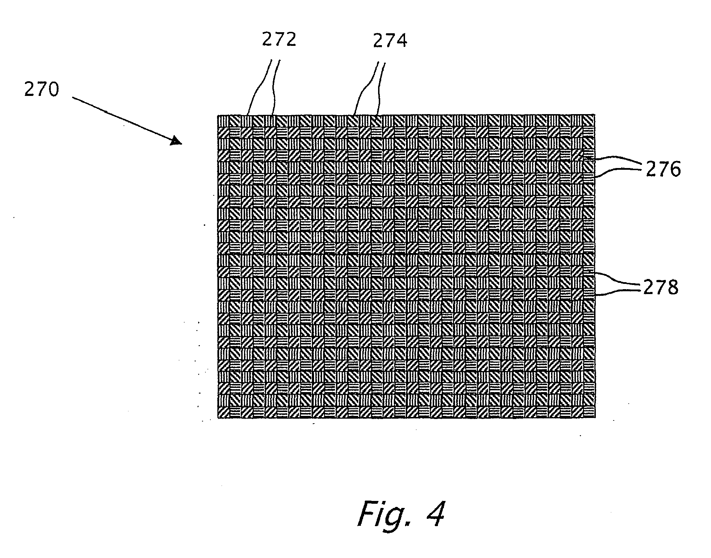

The choice of a "checkerboard" is given by way of example only and other shapes or geometric lattices may be similarly used, such as stripes of red and clear. Figure 3 illustrates yet another example embodiment of a filter 260, in accordance with the present invention. In filter 260, two streams of corresponding symmetric images can be formed, each of which with preferably a different color element, one stream of images with pixels yield from color stripes 262, a second stream of images with pixels yield from color stripes 274. Each colored stream of images can serve a different application and/or support application performed by the system, in certain situations. Figure 4 illustrates yet another example embodiment of a filter 270, in accordance with the present invention. In filter 270, four streams of corresponding symmetric images can be formed, each of which with preferably a different color element, one stream of images with pixels yield from color element 272, a second stream of images with pixels yield from color element 274, a third image with pixels yield from color element 276 and a fourth image with pixels yield from color element 278. Each colored stream of images can serve a different application and/or support application performed by the system, in certain situations.

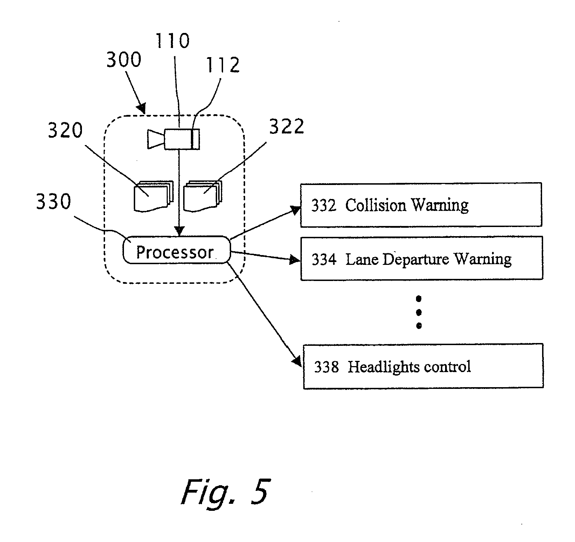

In one embodiment of the invention, a red/clear checkerboard filter 250 is used. Figure 5 is a drawing according to an embodiment of the present invention of a vehicle control and warning system 300, using the same camera 110 and hardware as in Figure 1a. Camera 110 of system 300 also includes a checkerboard filter 200, thereby producing at least two streams of respective image frames, for example, clear images 322 and red images 320. Each of the at least two streams is analyzed in parallel by processing unit 330.

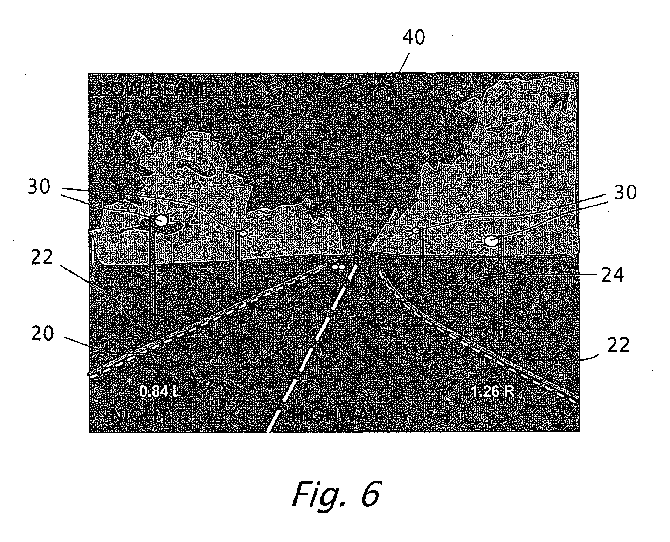

Figure 6 illustrates an example of a monitor output of a system 300 having a lane departure warning sub-system 334 and a vehicle headlight control sub-system 338, according to embodiments of the present invention, in a night scene. During night operation, the LDA will perform optimally with clear image stream 322; which is used as the primary image stream. Taillight detection will perform optimally with red images 320 and thus red image stream 320 is used as the primary image stream for this application. System 300 detects an oncoming vehicle 40 and switches the headlight to low beam state. In daytime operation, system 300 also detects yellow lane markings 22 on concrete road surfaces 20, other lane markings 24 and street lights 30.

System 300 is improved over prior art system 100, having the choice of using two or more sets of symmetric image frames acquired from filters with different color elements, the filter is coupled with camera 1 10. The improved system performance enables improving blocks 132, 134, ... , 138, respectively replacing blocks 332, 334, ... , 338.

During night operation, clear images 322 are used as the primary images, as clear images 322 are more responsive to light. Red images 320 are used during daytime for lane detection since the red light enhances yellow lines 22 on concrete roads surface 20 thus solving the problems of B&W cameras not utilizing a filter 250 (which can be thought of as if using an array of only clear pixels), where yellow lines 22 and concrete roads surface 20 yield in the acquired images substantially the same intensity. During day light operation, red image stream 320 is used as the primary image stream. Red images 320 yield an average intensity which is lower by 35-50% relative to respective clear images 322. Thus, another problem of a B&W image sensor is solved: preventing the saturation of images in very bright days. In the day time, when entering dark situations such as tunnels, the system can switch to using the clear image 322 as the primary image stream.

Systems 200 or 300 switch between primary and secondary images can be triggered by the detected image brightness and camera 110 settings. For example, if system 200/300 uses the red images as the primary images and the automatic gain control (AGC) unit of camera 110 requests an exposure above a certain threshold, system 200/300 switches to using the clear image. Furthermore, in consideration of the "quantization problem" and in order to improve the exposure used, in case where the red image is for example 65% as bright as the clear image, if the red image with one image line of exposure (for example 25µSec) is too dark but the red image with two image lines of exposure is too bright, the AGC algorithm, can choose to use the clear image with one image line of exposure, which is in between.

At any time, if an object is not detected in the primary image but detected in the respective secondary image, system 300 will switch to use the secondary image. For example, if a lane markings 22 are not detected in the primary image, for example a clear image 322, system 300 can switch to using a respective image from the secondary image stream, for example red image stream 320, if the lane marking 22 is detected in the secondary image.

Figure 6 illustrates an example of a monitor output of a system 300 having a lane departure warning sub-system 134 and a vehicle headlight control sub-system 138, according to embodiments of the present invention, in a night scene. Figure 6 exemplifies a concurrent use of system 300 in two DAS different applications: LDA application and AHC application. During night operation, the clear image stream is used as the primary image stream for the LDA application. The LDA will perform optimally with red images and thus the red image stream is used as the primary image stream for this application. Figure 6 also shows the AHC application as being active and uses the red image stream as the primary image stream to detect spots of light, and then the AHC application uses the relative brightness in the primary and secondary images to determine the color of the spot. In particular, the AHC application determines whether the spot is a red light which is indicative of leading vehicle taillights 12 (Figure 1).

The invention being thus described in terms of embodiments and examples, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A system mounted on a vehicle for performing vehicle control applications and driver assisting applications comprising a camera configured to acquire a plurality of images of the environment in front of the camera, the camera characterizes by a filter wherein said filter is installed at the focal plane of said camera and wherein designated portions of said filter transmit predetermined light wavelength and wherein all of said filter portions transmitting a substantially different light wavelength have substantially symmetric in size, resolution and in spatial distribution, the system **characterized by** an image processor capable of analyzing in real time a plurality of image sequences acquired from at least one of said portions of said filter.

2. The system of claim 1, wherein said filter has a checkerboard pattern having two colors, thereby two images are acquired, one from each light color transmitted by each color of said two colors of said checkerboard filter.

3. The system of claim 9, wherein one color of said filter with checkerboard pattern transmits substantially all wave length of light (white light), and the second color transmits red light, thereby producing a clear image portion and a red image portion, wherein a clear image portion and a respective red image portion are substantially symmetric images.

4. The system of claim 3, wherein the average intensity of said red image portion is lower by 35-50% of the average intensity of a respective said clear image portion, and thereby if a pixel in said clear image portion is saturated, the corresponding pixel in the respective red image portion might not be saturated.

5. The system of claim 1, wherein said filter has a stripe pattern, thereby two images are acquired, one from each stripe of light colors transmitted from each color of said stripe filter.

6. The system of claim 5, wherein one color of said filter with stripe pattern transmits substantially all wave length of light (white light), and the second color transmits red light, thereby producing a clear image portion and a respective red image portion, wherein said clear image portion and said red image portion are substantially symmetric images.

7. The system of claim 6, wherein the average intensity of said red image portion is lower by 35-50% of the average intensity a respective said clear image portion, and thereby if a pixel in said clear image portion is saturated, the corresponding pixel in the respective red image portion is not saturated.

8. A method for performing vehicle control applications and driver assisting applications, including detecting an object, performed by a system mounted on a vehicle, the system including a camera, the camera including a filter as in claim 1, the method **characterized by** selecting portions of pixels of the image based on the spatial transmittance profile of the filter, thereby producing image streams from each of said portions, wherein respective image portions of a camera frame are substantially symmetric image portions and wherein each of said image streams is processed by a separate image processing sub-unit.

9. The method of claim 8, wherein one of said portions of pixels are formed from a portion of said filter transmitting white light, and a second portion of pixels are formed from a portion of said filter transmitting red light, thereby respectively producing a clear image stream and a red image stream, wherein respective clear image and red image portions of a camera frame are substantially symmetric images.

10. The method of claim 9, wherein the system analyzes respective symmetrical images acquired from each of said portions of said filter, to detect objects in said images, thereby an object is detected in of said respective images, wherein said primary images are used by the system to further process said detected object.

11. The method of claim 9, wherein the system analyzes respective symmetrical images acquired from each of said portions of said filter, to detect objects in said images and an object is detected only in the primary image, and wherein said primary images are used by the system to further process said detected object.

12. The method of claim 9, wherein the system analyzes respective symmetrical images acquired from each of said portions of said filter, to detect objects in said images and an object is detected only in the secondary image, and wherein said secondary image is used by the system to further process said detected object.

13. The method of claim 12, wherein said detected object is a yellow lane marked on a concrete road surface.

14. The method of claim 8, wherein in the day time, said red image portions are used as the primary images.

15. The method of claim 8, wherein at night and low ambient light conditions, said clear image portions are used as the primary images.

16. The method of claim 8, wherein each of said streams images, acquired from each portion of said filter transmitting having a substantially different light wavelength, is used as input to a different DAS application.
